**Europäisches Patentamt**

**European Patent Office**

**Office européen des brevets**

(11) Veröffentlichungsnummer: **0 374 250**
**A1**

## (12) EUROPÄISCHE PATENTANMELDUNG
### veröffentlicht nach Art. 158 Abs. 3 EPÜ

(21) Anmeldenummer: **88907450.6**

(22) Anmeldetag: **14.04.88**

(86) Internationale Anmeldenummer:
**PCT/SU88/00079**

(87) Internationale Veröffentlichungsnummer:
**WO 89/10038 (19.10.89 89/25)**

(51) Int. Cl.5: **H04N 5/44**

(43) Veröffentlichungstag der Anmeldung:
**27.06.90 Patentblatt 90/26**

(84) Benannte Vertragsstaaten:
**AT BE CH DE FR GB IT LI LU NL SE**

(71) Anmelder: **INSTITUT PROBLEM REGISTRATSII INFORMATSII AKADEMII NAUK UKRAINSKOI SSR**
**ul. N.Shpaka, 2**
**Kiev, 252113(SU)**

(72) Erfinder: **ANTONOV, Alexandr Alexandrovich**
**pr. Vernadskogo, 85-64**
**Kiev, 252142(SU)**
Erfinder: **PETROV, Vyacheslav Vasilievich**
**ul. Montazhnikov, 104**
**Kiev, 252069(SU)**
Erfinder: **ANTONOVA, Olga Iliinichna**
**pr. Vernadskogo, 85-65**
**Kiev, 252142(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **VORRICHTUNG ZUM WIEDERGEBEN VON INFORMATIONEN.**

(57) A device for reproducing information comprises a receiving-amplifying unit (1) connected to a source (2) of the information signal, generators for line (3) and frame (4) scanning, a converter (5) of the signal into a reproduced image connected to the generators (3, 4) for line and frame scanning, an output amplifier (11), a detector (7) of the contours of the image to be reproduced connected to the receiving-amplifying unit (1), a threshold unit (8) connected to the detector (7) of the image to be reproduced, a control signal former (10) connected to the threshold unit (8) and to the output amplifier (11).

FIG.1

# INFORMATIONSWIEDERGABEEINRICHTUNG

## Gebiet der Technik

Die Erfindung bezieht sich auf die Bildübertragungstechnik, beispielsweise auf das Fernsehen, insbesondere bei der Zeilenfolge- oder Zwischenzeilen-Bildabtastung, und betrifft nämlich Informationswiedergabeeinrichtungen.

## Zugrundeliegender Stand der Technik

Es ist eine Informationswiedergabeeinrichtung (US, A, 2678964) bekannt, die einen Hochfrequenzverstärker, einen Frequenzwandler, einen Zwischenfrequenzverstärker, einen Videodetektor, einen Videoverstärker einen Tonkanal, einen Zeilen- und einen Bildablenkgenerator eine Bildröhre mit einem Ablenksystem sowie zusätzliche Baugruppen enthält, die zur Erhöhung der Schärfe des wiederzugebenden Bildes dienen. Die Bildschärfe wird in der bekannten Informationswiedergabeeinrichtung durch Verlangsamung der Zeilenabtastgeschwindigkeit bei der Wiedergabe der Bildkonturen, d.h. durch beliebige genügend rasche Änderungen der Bildhelligkeit erreicht. Zu diesem Zweck ist in diese Einrichtung eine Reihenschaltung aus einem Bildkonturendetektor, einem Ausgangsverstärker und noch einer Zeilenablenkspule (außer der zum Ablenksystem gehörenden Spule) oder aus Zeilenablenkplatten zusätzlich eingeführt. Hierbei ist der Eingang der Bildkonturendetektoren an den Ausgang des Videoverstärkers angeschlossen. Der Bildkonturendetektor selbst enthält eine oder zwei Differenzierketten und kann Signalpegelbegrenzer aufweisen.

Besonderheit der bekannten Informationswiedergabeeinrichtung ist ein niedriger Grad der Erhöhung der Bildschärfe. Der niedrige Grad der Erhöhung der Bildschärfe ist auf eine nicht rechteckige Form des durch den Bildkonturendetektor formierten Signals zurückzuführen. Da die Dauer dieses Signals gleich der Flankendauer des Videosignals ist, aus dem es formiert wird, und dieses Signal eine mehrere vorzeichenverschiedene Halbwellen aufweisende komplizierte Form hat, wird der Abtaststrahl nicht für die Gesamtdauer der Flanke des Videosignals, sondern erst für deren geringen Teil gestoppt.

Es ist eine Informationswiedergabeeinrichtung (US, A, 4080628) bekannt, die einen Hochfrequenzverstärker, einen

- 2 -

Frequenzwandler, einen Zwischenfrequenzverstärker, einen Videodetektor, einen Videoverstärker, einen Tonkanal, einen Zeilen- und einen Bildablenkgenerator, eine Bildröhre mit einem Ablenksystem, einen Bildkonturendetektor, einen Ausgangsverstärker und eine weitere Zeilenablenkspule (ausser der zum Ablenksystem gehörenden Spule) oder Zeilenablenkplatten enthält. Im Bildkonturendetektor wird das Ausgangssignal durch Differenzierung des Videosignals, dessen Zweitaktbegrenzung, Summation des begrenzten Signals und des Ausgangssignals und durch anschließende wiederholte Differenzierung der erhaltenen Summe erzeugt. Dieses Signal wird über den Ausgangsverstärker an die Zeilenablenkplatten oder- spulen angelegt.

In der bekannten Einrichtung der Abtaststrahl wird während der Wiedergabe der Bildkonturen nur für ein Zeitintervall gestoppt, das wesentlich kleiner als die Dauer der entsprechenden Flanke des Videosignals ist, weshalb der Grad der Erhöhung der Bildschärfe nicht groß ist.

Offenbarung der Erfindung

Der Erfindung liegt die Aufgabe zugrunde, eine Informationswiedergabeeinrichtung mit solch einer schaltungstechnischen Lösung zu schaffen, die es gestattet, ein vollständiges Stoppen des Abtaststrahls für die Gesamtdauer der Zeit zu sichern, während der sich die durch ein der Bildröhre zugeführtes Videosignal bedingte Helligkeit des wiederzugebenden Bildes ändert, was die Möglichkeit bietet, die Schärfe und damit die Treue des wiederzugebenden Bildes wesentlich zu erhöhen.

Das Wesen der Erfindung besteht darin, daß die Informationswiedergabeeinrichtung, die eine zum Empfang, der Verstärkung und Trennung eines Informations-Videosignals sowie eines Zeilen- und eines Bildsynchronisationssignals vorgesehene Empfangsverstärkereinheit mit einem Zeilen-, einem Bildsynchroausgang, mit mindestens einem Informationsausgang und einem an eine Informationssignalquelle angeschlossenen Eingang, einen Zeilen- und einen Bildablenkgenerator, die zur Standardrastererzeugung dienen und deren Eingänge jeweils mit dem Zeilen- und Bildsynchroausgang der Empfangsverstärkereinheit verbunden sind, einen zur Erzeugung eines wiederzugebenden Bildes auf dem Bildschirm der Bildröhre dienenden Wandler zur Umwandlung eines Signals in ein wiederzugebendes Bild, dessen erster Eingang mit dem Ausgang des Zeilenablenkgenerators verbunden, dessen zweiter Eingang an den Ausgang des Bildablenkgenerators angeschlossen und dessen dritter Eingang mit dem Informationsausgang der Empfangsverstärkereinheit elektrisch gekoppelt ist, einen Ausgangsverstärker, dessen Ausgang mit einem vierten Eingang des Wandlers zur Umwandlung eines Signals in ein wiederzugebendes Bild verbunden ist, einen Detektor von Konturen eines wiederzugebendes Bildes enthält, der zur Formierung eines Steuersignals für das Zeilenabtastverfahren bei der Wiedergabe der Bildkonturen dient und dessen Eingang an den Informationsausgang der Empfangsverstärkereinheit angeschlossen ist, gemäß der Erfindung ein Schwellenglied, das an den Ausgang des Detektors von Konturen eines wiederzugebenden Bildes angeschlossen ist und bei der Wiedergabe der Bildkonturen für die Erhaltung einer gleichbleibenden und nahe bei Null liegenden Zeilenabtastgeschwindigkeit des Strahls sorgt, einen Steuersignalformer aufweist, in dem zu den Zeitpunkten der Wiedergabe der Bildkonturen eine Sägezahnspannung erzeugt und dessen erster Eingang an den Ausgang des Schwellengliedes geschaltet ist, während dessen Ausgang an den Eingang des Ausgangsverstärkers gelegt ist, der zur Umwandlung der Sägezahnspannung in einen Sägezahnstrom dient, der ein Ablenkfeld der gleichen Stärke, wie sie das durch den Zeilenablenkgenerator erzeugte Feld aufweist, nur aber entgegengesetzter Polarität aufbaut.

Bevorzugt ist, daß die Informationswiedergabeeinrichtung einen Entzerrer für geometrische Verzerrungen eines wiederzugebenden Bildes enthält, der zur Verhinderung von räumlichen Verschiebungen der Konturen eines wiederzugebenden Bildes dient und dessen erster Eingang an den Ausgang des Schwellengliedes, dessen zweiter Eingang an den Zeilensynchroausgang der Empfangsverstärkereinheit angeschlossen und dessen Ausgang mit dem zweiten Eingang des Steuersignalformers verbunden ist.

Es ist möglich, daß die Informationswiedergabeeinrichtung einen Entzerrer für Helligkeitsverzerrungen eines wiederzugebenden Bildes enthält, der zur Verhinderung von Verzerrungen der Helligkeitsstufen der Konturen eines wiederzugebenden Bildes und des Hintergrundes dient und elektrisch zwischen dem Informationsausgang der Empfangsverstärkereinheit und dem dritten Eingang des Wandlers eines Signals in ein wiederzugebendes Bild geschaltet ist, wobei der zweite Eingang des Entzerrers für Helligkeitsverzerrungen eines wiederzugebenden Bildes an den Ausgang des Schwellengliedes und dessen dritter Eingang an den Ausgang des Entzerrers für geometrische Verzerrungen eines wiederzugebendes Bildes gelegt ist.

Es ist auch möglich, daß die Informationswiedergabeeinrichtung zwei zusätzliche Entzerrer für Helligkeitsverzerrungen eines wiederzugebenden Bildes enthält, die zur Entzerrung der Helligkeitsstufen von Farbsignalen dienen und deren erste Eingänge jeweils an den zweiten und dritten Informationsausgang der Empfangsverstärkereinheit, deren zweite Eingänge an den Ausgang des Schwellengliedes und deren dritte Eingange an den Ausgang des Entzerrers für geometrisch Verzerrungen eines wiederzugebenden Bildes und deren Ausgänge an den fünften und sechsten Eingang des Wandlers zur Umwandlung eines Signals in ein wiederzugebendes Bild geschaltet sind.

Sinnvoll ist, daß der Entzerrer für Helligkeitsverzerrungen eines wiederzugebenden Bildes in der Informationswiedergabeeinrichtung einen Differenzverstärker aufweist, der zur Subtraktion eines im Schwellenglied formierten Signals von dem zu einem am Ausgang des Entzerrers für geometrische Verzerrungen eines wiederzugebenden Bildes abgenommenen Signal addierten Ausgangs-Informationssignal dient, wobei an einen Eingang des Differenzverstärkers der Ausgang des Schwellengliedes, an dessen anderen Eingang der Ausgang des Entzerrers für geometrische Verzerrungen eines wiederzugebenden Bildes, an dessen dritten Eingang der Informationsausgang der Empfangsverstärkereinheit angeschlossen und dessen Ausgang mit dem dritten Eingang des Wandlers zur Umwandlung eines Signals in ein wiederzugebendes Signal gekoppelt ist.

Sinnvoll ist es auch, daß der Entzerrer für geometrische Verzerrungen eines wiederzugebenden Bildes ein erstes und ein zweites Verzögerungsglied, ein Analogspeicherglied, ein ODER-Glied, dessen erster Eingang an den Ausgang des Schwellengliedes, dessen zweiter Eingang an den Zeilensynchroausgang der Empfangsverstärkereinheit und dessen Ausgang an die Eingänge des ersten, des zweiten Verzögerungsgliedes und des Analogspeichergliedes angeschlossen ist, einen Logarithmenverstärker, ein Differenzierglied, einen Generator für eine sich linear ändernde Spannung, dessen Eingang an den Ausgang des ersten Verzögerungsgliedes und dessen Ausgang an den Logarithmenverstärker gelegt ist, der an das Differenzierglied angeschlossen ist, dessen Ausgang mit dem zweiten Eingang des Analogspeichergliedes in Verbindung steht, einen Analog-Digital- und einen Digital-Analog-Wandler, ein Operativspeicherglied enthält, an dessen ersten Eingang das zweite Verzögerungsglied, an dessen zweiten Eingang der Ausgang des mit dem Ausgang des Analogspeichergliedes verbundenen Analog-Digital-Wandlers und an dessen Ausgang der Digital-Analog-Wandler angeschlossen ist, dessen Ausgang als Ausgang des Entzerrers für geometrische Verzerrungen eines wiederzugebenden Bildes dient und mit dem Eingang des Steuersignalformers gekoppelt ist.

Es ist durchaus möglich, daß der Entzerrer für geometrische Verzerrungen eines wiederzugebenden Bildes einen Spitzendetektor, einen elektronischen Schalter, ein Analogschieberegister, ein erstes Verzögerungsglied, dessen Eingang mit dem Ausgang des Schwellengliedes verbunden und dessen Ausgang an den Spitzendetektor angeschlossen ist, ein zweites Verzögerungsglied, dessen Eingang mit dem Zeilensynchroausgang der Empfangsverstärkereinheit verbunden und dessen Ausgang an den Steuereingang des elektronischen Schalters angekoppelt ist, dessen einer Signalausgang mit der gemeinsamen Leitung verbunden und dessen anderer Signalausgang an den zweiten Eingang des Spitzendetektors angeschlossen ist, dessen Ausgang an den Signaleingang des Analogschieberegisters gelegt ist, ein ODER-Glied, dessen

- 6 -

einer Eingang an den Ausgang des Schwellengliedes, dessen anderer Eingang an den Zeilensynchroausgang der Empfangsverstärkereinheit und dessen Ausgang an den Steuereingang des Analogschieberegisters angekoppelt ist, einen Reversierzähler, ein drittes Verzögerungsglied, dessen Eingang an den Ausgang des ODER-Gliedes und dessen Ausgang an den Subtraktionseingang des Reversierzählers angeschlossen ist, an dessen Summationseingang der Ausgang des ODER-Gliedes angekoppelt ist, und einen Multiplexer enthält, an dessen N Signaleingänge die N Ausgänge des Analogschieberegisters, an dessen M Steuereingänge die Ausgänge des Reversierzählers angeschlossen sind und dessen Ausgang als Ausgang des Entzerrers für geometrische Verzerrungen eines wiederzugebenden Bildes auftritt und an den Eingang des Steuersignalformers angekoppelt ist.

Es ist möglich, daß das Analogschiebergister in Reihe liegende 2N - 1 Analogspeicherglieder, von denen die ungeraden mit ihren Ausgängen an die Signaleingänge des Multiplexers geschaltet sind, und ein Verzögerungsglied aufweist, dessen Eingang mit den Steuereingängen der ungeraden Analogspeicherglieder verbunden und dessen Ausgang an die Steuereingänge der geraden Analogspeicherglieder gelegt ist.

Die Erfindung gestattet es, die Schärfe des auf dem Bildschirm der Bildröhre wiederzugebenden Bildes wesentlich zu erhöhen, weil sie den Einfluß der begrenzten Auflösung der Fernsehaufnaheröhren und des begrenzten Frequenzbandes des Übertragungskanals auf die Schärfe des wiederzugebenden Bildes praktisch vollständig beseitigt, denn der Abtaststrahl wird für die Dauer der Wiedergabe der Bildkonturen ganz gestoppt, weshalb es möglich wird, vorzügliche Bilder selbst mit Hilfe beispielsweise billiger Reportageaufnahmegeräte, unter Benutzung preisgünstiger Videobandgeräte zu bekommen. Die Schärfe des wiederzugebenden Bildes ist gleichermaßen gut so bei Verwendung einfacher wie auch komplizierter Fernsehaufnaheeinrichtungen und hängt praktisch nur von der Vollkommenheit des verwendeten Fernsehempfängers ab. Die erfindungsgemäß erreichte Erhöhung der Bildschärfe ermöglicht es, die Augenermüdung beim Durchsehen von Fernsehsendungen beträchtlich zu verringern.

Kurzbeschreibung der Zeichnungen

Die Erfindung soll nachstehend an einem konkreten Ausführungsbeispiel anhand der beiliegenden Zeichnungen näher erläutert werden Es zeigt:

Fig. 1 ein Funktionsschaltbild einer einer erfindungsgemäßen Informationswiedergabeeinrichtung in Anlehnung an ein Monochrombild;

Fig. 2 ein Funktionsschaltbild einer erfindungsgemäßen Informationswiedergabeeinrichtung in Anlehnung an ein Farbbild;

Fig. 3 ein Funktionsschaltbild eines erfindungsgemäßen Detektors von Konturen eines wiederzugebenden Bildes;

Fig. 4 ein Funktionsschaltbild eines erfindungsgemäßen Entzerrers für Helligkeitsverzerrungen eines wiederzugebenden Bildes mit einem Analogvervielfacher;

Fig. 5 ein Funktionsschaltbild eines erfindungsgemäßen Entzerrers für Helligkeitsverzerrungen eines wiederzugebenden Bildes ohne Analogvervielfacher;

Fig. 6 ein Funktionsschaltbild eines erfindungsgemäßen Entzerrers für geometrische Verzerrungen eines wiederzugebenden Bildes mit einem Digitalspeicherglied;

Fig. 7 ein Funktionsschaltbild eines erfindungsgemäßen Entzerrers für geometrische Verzerrungen eines wiederzugebenden Bildes mit Analogspeichergliedern;

Fig. 8 eine elektrische Schaltung eines erfindungsgemäßen Steuersignalformers mit einem Analoginverter;

Fig. 9 eine elektrische Schaltung eines erfindungsgemäßen Steuersignalformers mit einem Analog-Differenzverstärker;

Fig. 10a,b,c,d,e,f,g,h Signalverläufe, die die Arbeit der in Fig. 1 dargestellten erfindungsgemäßen Einrichtung für den Fall erläutern, wo die mittleren Zwischenimpulsanteile zwischen den Vorderflanken der benachbarten Impulse ermittelt werden;

Fig. 11a,b,c,d,e,f,g,h Signalverläufe, die die Arbeit der in Fig. 1 dargestellten erfindungsgemäßen Einrichtung für den Fall erläutern, wo die mittleren Zwischenimpulsanteile zwischen den Hinterflanken der benachbarten Impulse ermittelt werden;

Fig. 12a,b,c,d Signalverläufe, die die Arbeit eines erfindungsgemäßen Detektors von Konturen eines wiederzugebenden Bildes veranschaulichen;

Fig. 13a,b,c,d,e,f Signalverläufe, die die Arbeit des in Fig. 4 dargestellten erfindungsgemäßen Entzerrers für Helligkeitsverzerrungen eines wiederzugebenden Bildes veranschaulichen;

Fig. 14a,b,c,d Signalverläufe, die die Arbeit des in Fig. 5 dargestellten erfindungsgemäßen Entzerrers für Helligkeitsverzerrungen eines wiederzugebenden Bildes veranschaulichen;

Fig. 15a,b,c,d,e,f,g,h,i Signalverläufe, die die Arbeit des in Fig. 6 dargestellten erfindungsgemäßen Entzerrers für geometrische Verzerrungen eines wiederzugebenden Bildes erläutern;

Fig. 16a,b,c,d,e,f,g,h,i,j,p,r,s,u Signalverläufe, die die Arbeitsweise des in Fig. 7 dargestellten erfindungsgemäßen Entzerrers für geometrische Verzerrungen eines wiederzugebenden Bildes erläutern;

Fig. 17a,b,c Signalverläufe, die die Arbeitsweise der in Fig. 8 und 9 dargestellten erfindungsgemäßen Steuersignalformer veranschaulichen.

Bevorzugte Ausführungsform der Erfindung

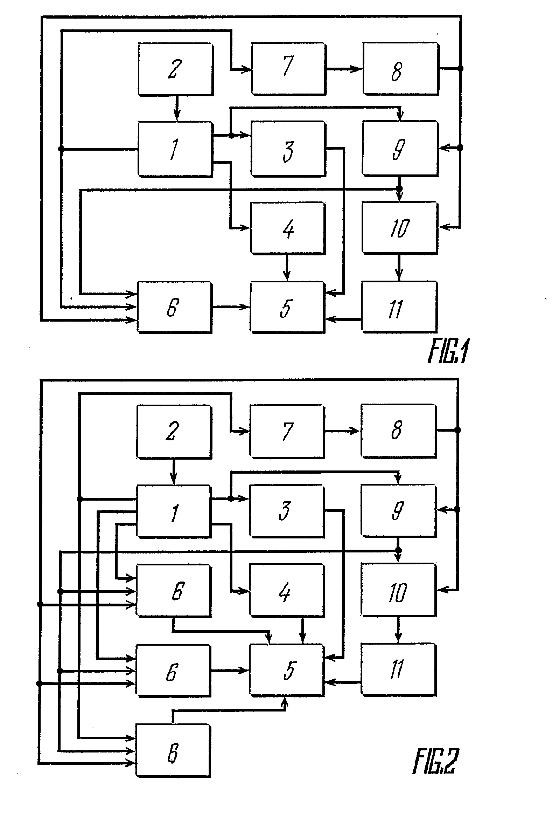

Die Informationswiedergabeeinrichtung enthält eine Empfangsverstärkereinheit 1 (Fig. 1), deren Eingang an den Ausgang einer Informationssignalquelle 2 angeschlossen ist. Als Quelle 2 kommen beispielsweise eine Antenne, ein Magnetbandgerät, eine Fernsehaufnahmekamera in Frage. Die Empfangsverstärkereinheit 1 ist in bekannter Schaltung (U. Titse et. al. "Halbleiterschaltungstechnik", 1983, Verlag "Mir" S,286 bis 292) ausgeführt und weist folgende Ausgänge: einen Zeilensynchroausgang, an dem Zeilensynchronisierimpulse abgenommen werden, einen Bildsynchroausgang, an dem Bildsynchronisierimpulse abgenommen werden, und mindestens einen Informationsausgang auf. Falls ein Schwarz-Weiß-Bild (oder ein Monochrombild) wiedergegeben wird, ist der Informationsausgang der einzige, und daran wird ein Videosignal abgenommen. Die Empfangsverstärkereinheit 1 ist zum Empfang, der Verstärkung und Trennung eines Informations-Videosignals sowie eines Zeilen- und eines Bildsynchronisiersignals vorgesehen.

Die Informationswiedergabeeinrichtung enthält einen Zeilenablenkgenerator 3 und einen Bildablenkgenerator 4 (die in bekannter Schaltung ausgeführt sind). Der Eingang des Zeilenablenkgenerators 3 ist an den Zeilensynchroausgang der Empfangsverstärkereinheit 1 angeschlossen. Der Eingang des Bildablenkgenerators 4 ist an den Bildsynchroausgang der Empfangsverstärkereinheit 1 angeschlossen. Der Zeilen- und der Bildablenkgenerator 3 bzw. 4 sind zur Standardrastererzeugung bestimmt.

Die Informationswiedergabeeinrichtung enthält auch einen Wandler 5 zur Umwandlung eines Signals in ein wiederzugebendes Bild, der beispielsweise in Form einer Bildröhre mit einem Ablenksystem und entsprechenden Speisestromkreisen und Regelungen ausgeführt werden kann. Der Wandler 5 zur Umwandlung eines Signals in ein wiederzugebendes Bild ist zur Erzeugung des wiederzugebenden Bildes auf dem Bildschirm der Bildröhre vorgesehen. Der erste und der zweite Eingang des Wandlers 5 zur Umwandlung eines Signals in ein wiederzugebendes Bild sind an die Ausgänge des Zeilen- und Bildablenkgenerators 3 bzw. 4 gelegt.

Die Informationswiedergabeeinrichtung enthält einen Entzerrer 6 für Helligkeitsverzerrungen eines wiederzugebenden Bildes, dessen erster Eingang an den Informationsausgang der Empfangsverstärkereinheit 1 geschaltet ist, einen Detektor 7 von Konturen eines wiederzugebenden Bildes, dessen Eingang an den Informationsausgang der Empfangsverstärkereinheit 1 angekoppelt und zur Formierung eines Steuersignals für das Zeilenabtastverfahren bei der Wiedergabe der Bildkonturen vorgesehen ist.

Die Informationswiedergabeeinrichtung weist außerdem ein Schwellenglied 8, beispielsweise einen Komparator oder ein Monoflop (U. Titse et. al. "Poluprovodnikovaya skhemotekhnika /Halbleiterschaltungstechnik/", Verlag "Mir", Moskau, 1983, S. 286 bis 292) auf, dessen Eingang an den Ausgang

- 10 -

des Detektors 7 von Konturen eines wiederzugebenden Bildes angeschlossen ist und das für die Erhaltung einer gleichbleibenden und nahe Null liegenden Zeilenabtastgeschwindigkeit des Strahls bei der Wiedergabe der Bildkonturen sorgt, einen Entzerrer 9 für geometrische Verzerrungen eines wiederzugebenden Bildes, einen Steuersignalformer 10. Der Ausgang des Schwellengliedes 8 ist an die ersten Eingänge des Entzerrers 9 für geometrische Verzerrungen bzw. des Steuersignalformers 10 und an den zweiten Eingang des Entzerrers 6 für Helligkeitsverzerrungen eines wiederzugebenden Bildes angeschlossen. Zum dritten Eingang des Entzerrers 6 für Helligkeitsverzerrungen eines wiederzugebenden Bildes ist der Ausgang des Entzerrers 9 für geometrische Verzerrungen eines wiederzugebenden Bildes geführt, der auch an den zweiten Eingang des Steuersignalformers 10 gelegt ist. An den zweiten Eingang des Entzerrers 9 für geometrische Verzerrungen eines wiederzugebenden Bildes ist der Zeilensynchroausgang der Empfangsverstärkereinheit 1 angeschlossen.

Die Informationswiedergabeeinrichtung enthält einen Ausgangsverstärker 11, der zur Umwandlung der Sägezahnspannung in einen Sägezahnstrom vorgesehen ist, der ein Ablenkfeld der gleichen Stärke, wie sie das durch den Zeilenablenkgenerator 3 erzeugte Feld aufweist, nur aber entgegengesetzter Polarität aufbaut. Der Ausgang des Steuersignalformers 10 ist an den Ausgangsverstärker 11 angeschaltet. Der Ausgangsverstärker 11 kann in bekannter Schaltung (SU, A, 879818) aufgebaut werden. Der Ausgang des Ausgangsverstarkers 11 ist an den vierten Eingang des Wandlers 5 zur Umwandlung eines Signals in ein wiederzugebendes Bild gekoppelt. An den dritten Eingang des Wandlers 5 eines Signals in ein wiederzugebendes Bild ist der Ausgang des Entzerrers 6 für Helligkeitsverzerrungen eines wiederzugebenden Bildes geschaltet.

Im Falle der Wiedergabe eines Farbbildes ist die in Fig. 2 dargestellte Funktionsschaltung der Informationswiedergabeeinrichtung analog der in Fig. 1 dargestellten Funktionsschaltung, nur daß die Empfangsverstärkereinheit 1 (Fig. 2) drei Informationsausgänge aufweist, an denen Signale roter, grüner und blauer Farbe abgenommen werden, während die Informationswiedergabeeinrichtung zwei zusätzliche

- 11 -

Entzerrer 6 zur Helligkeitsverzerrungen eines wiederzugebenden Bildes umfaßt, die zur Korrektur der Helligkeitsstufen der Farbsignale dienen und deren erste Eingänge jeweils an den zweiten und dritten Informationsausgang der Empfangsverstärkereinheit 1, deren zweite Eingänge an den Ausgang des Schwellengliedes 8 und deren dritte Eingänge an den Ausgang des Entzerrers 9 für geometrische Verzerrungen eines wiederzugebenden Bildes angekoppelt sind, während deren Ausgänge an den fünften und sechsten Eingang des Wandlers 5 zur Umwandlung eines Signals in ein wiederzugebendes Bild angeschlossen sind.

Der Detektor 7 von Konturen eines wiederzugebenden Bildes enthält eine Reihenschaltung aus einem Verzögerungsglied 12 (Fig. 2), beispielsweise einer 50 - bis 100-ns--Verzögerungsleitung, einem Differenzverstärker 13 und einem Gegentaktgleichrichter 14 (U.Titse et. al. "Poluprovodnikovaya skhemotekhnika /Halbleiterschaltungstechnik/", Verlag "Mir", Moskau, 1983, S. 137 bis 140, 470 bis 472).

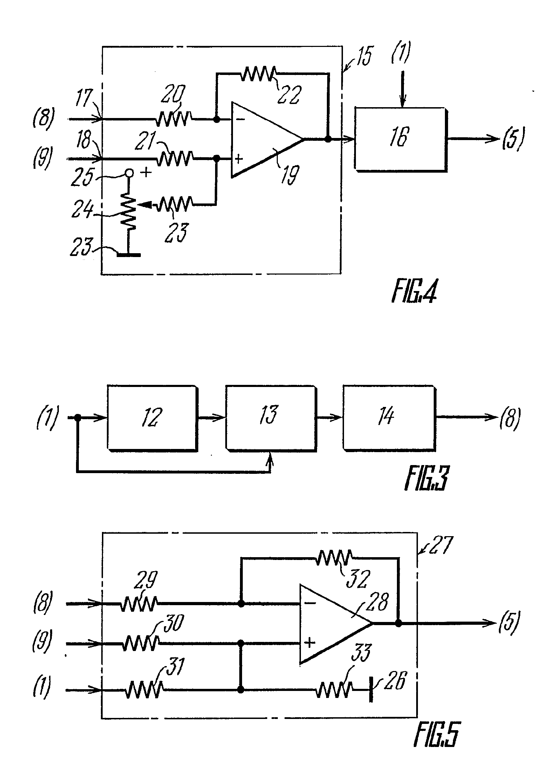

Der Enzerrer 6 für Helligkeitsverzerrungen eines wiederzugebenden Bildes ist zur Vermeidung von Verzerrungen der Helligkeitsstufen der Konturen und des Hintergrundes vorgesehen und weist eine Reihenschaltung aus einem Differenzverstärker 15 (Fig. 4) und einem 1-Quadranten-Analogvervielfacher 16 (U. Titse et. al. "Poluprovodnikovaya skhemotekhnika", Verlag "Mir", Moskau, 1983, S. 158 bis 165) auf. An den invertierenden Eingang 17 des Differenzverstärkers 15 ist der Ausgang des Schwellengliedes 8 und an den nicht invertierenden Eingang 18 des ersteren der Ausgang des Entzerrers 9 für geometrische Verzerrungen eines wiederzugebenden Bildes angeschlossen.

Der Differenzverstärker 15 ist aus einem Operationsverstärker 19 aufgebaut, wie dies z.B. in (U. Titse et, al. "Poluprovodnikovaya skhemotekhnika", Verlag "Mir", Moskau, 1983, S. 67 bis 72) gezeigt ist. An dessen invertierenden Eingang ist ein Widerstand 20 und an dessen nichtinvertierenden Eingang ein Widerstand 21 gelegt. Zwischen dem Ausgang des Operationsverstärkers 19 und dessen invertierendem Eingang liegt ein Widerstand 22. An den nicht invertieren-

- 12 -

den Eingang des Operationsverstärkers 19 ist über einen Widerstand 23 der bewegliche Kontakt eines Potentiometers 24 angeschaltet, dessen einer unbeweglicher Kontakt an eine Quelle 25 fester Vorspannung und dessen anderer unbeweglicher Kontakt an die gemeinsame Leitung 26 gelegt ist. Der andere Eingang des 1-Quadranten-Analogvervielfachers 16 ist an den Informationsausgang der Empfangverstärkereinheit 1 und dessen Ausgang an den Eingang des Wandlers 5 eines Signals in ein widerzugebendes Bild angekoppelt.

Der Entzerrer 6 für Helligkeitsverzerrungen kann in Form eines Differenzverstärkers 27 (Fig. 5) ausgeführt werden. Der Differenzverstärker 27 ist zur Subtraktion eines im Schwellenglied 8 formierten Signals von dem zu einem am Ausgang des Entzerrers 9 für geometrische Verzerrungen eines wiederzugebenden Bildes abgenommenen Signal addierten Ausgangs-Informationssignal vorgesehen. An einen Eingang des Differenzverstärkers 27 ist der Ausgang des Schwellengliedes 8, an dessen anderen Eingang der Ausgang des Entzerrers 9 für geometrische Verzerrungen eines wiederzugebenden Bildes und an dessen dritten Eingang der Informationsausgang der Empfangsverstärkereinheit 1 angeschlossen. Der Ausgang des Differenzverstärkers 27 ist an einen Eingang des Wandlers 5 zur Umwandlung eines Signals in ein wiederzugebendes Bild angekoppelt. Der Differenzverstärker 27 ist in Form eines Operationsverstärkers 28 ausgeführt. An den invertierenden Eingang des Operationsverstärkers 28 ist der Ausgang des Schwellengliedes 8 über einen Widerstand 29 und an dessen nichtinvertierenden Eingang der Ausgang des Entzerrers 9 für geometrische Verzerrungen eines wiederzugebenden Bildes über einen Widerstand 30 sowie der Informationsausgang der Empfangsverstärkereinheit 1 über einen Widerstand 31 geschaltet, während der Ausgang des Operationsverstärkers 28 mit einem Eingang des Wandlers 5 zur Umwandlung eines Signals in ein wiederzugebendes Bild verbunden ist. Der Widerstand 32 liegt zwischen dem Ausgang des Operationsverstärkers 28 und dessen invertierendem Eingang und der Widerstand 33 zwischen dem nichtinvertierenden Eingang des Operationsverstärkers 28 und der gemeinsamen Leitung 26.

Der Entzerrer 9 für geometrische Verzerrungen eines wiederzugebenden Bildes ist zur Verhinderung von räumlichen Verschiebungen der Konturen eines wiederzugebenden Bildes bestimmt und enthält ein ODER-Glied 34 (Fig. 6), dessen erster Eingang an das Schwellenglied 8 und dessen zweiter Eingang an den Zeilensynchroausgang der Empfangsverstärkereinheit 1 gelegt ist. Der Ausgang des ODER-Gliedes 34 ist an die Eingänge eines Verzögerungsgliedes 35 (beispielsweise einer Verzögerungsleitung oder eines Monoflops mit der Auslösung durch die Hinterflanke eines Eingangsimpulses), eines Verzögerungsgliedes 36 (beispielsweise eines Monoflops) und an den Steuereingang eines Analogspeichergliedes 37 (beispielsweise einer Auswahl- und Speicherschaltung) angeschlossen (U. Titse et. al. "Poluprovodnikovaya skhemotekhnika /Halbleiterschaltungstechnik/", Verlag "Mir", Moskau, 1983, S. 444 bis 454) angeschlossen. Der Ausgang des Verzögerungsgliedes 35 ist an einen Generator 38 für eine sich linear ändernde Spannung angelegt. Der Ausgang des Generators 38 ist an einen Logarithmenverstärker 39 (U. Titse et. al. "Poluprovodnikovaya skhemotekhnika /Halbleiterschaltungstechnik/", Verlag "Mir", Moskau, 1983, S. 148 bis 150) angekoppelt. Der Ausgang des Logarithmenverstärkers 39 ist an ein Differenzierglied 40 geschaltet. Das Differenzierglied 40 kann beispielsweise in Form eines Differenzverstärkers 41 ausgeführt werden, zwischen dessen Eingängen eine Verzögerungsleitung 42 von 50 bis 100 ns geschaltet ist. Der Ausgang des Differenziergliedes 40 ist an den Signaleingang des Analogspeichergliedes 37 angekoppelt, dessen Ausgang über einen Analog-Digital-Wandler 43 an ein beispielsweise aus einem Chip bestehenden Operativspeicherglied 44 (U. Titse et. al. "Poluprovodnikovaya skhemotekhnika", Verlag "Mir", Moskau, 1983, S. 454 bis 464; 392 bis 397) gelegt ist. An den anderen Eingang des Operativspeichergliedes 44 ist der Ausgang des Verzögerungsgliedes 36 (mit einer Verzögerungszeit von ca. einer Zeilenabtastperiode) angeschlossen. Der Ausgang des Operativspeichergliedes 44 ist an den Eingang des Digital-Analog-Wandlers 45 (U. Titse et. al. "Poluprovodnikovaya skhemotekhnika", Verlag

- 14 -

"Mir", Moskau, 1983, S. 444 bis 454) gelegt, dessen Ausgang als Ausgang des Entzerrers 9 für geometrische Verzerrungen eines wiederzugebenden Bildes wirkt und mit dem Eingang des Steuersignalformers 10 gekoppelt ist.

Der Entzerrer 9 für geometrische Verzerrungen eines wiederzugebenden Bildes kann nach einer anderen Schaltung aufgebaut werden und enthält in dieser Ausführungsform am Eingang identische Verzögerungsglieder 46 und 47 (beispielsweise Monoflops oder Verzögerungsleitungen). Der Ausgang des Verzögerungsgliedes 46 ist an den ersten Eingang eines in bekannter Schaltung ausgeführten Spitzendetektors 48 angeschlossen. Der Ausgang des Verzögerungsgliedes 47 ist an den Steuereingang eines elektronischen Schalters 49 angekoppelt, dessen erster Signalausgang an die gemeinsame Leitung 26 und dessen zweiter Signalausgang an den zweiten Eingang des Spitzendetektors 48 gelegt ist. Der Ausgang des Spitzendetektors 48 ist an den Signaleingang eines Analogschieberegisters 50 angeschlossen. Das Analogschieberegister 50 kann in Form von in Reihe geschalteten 2N - 1 Analogspeichergliedern 51 (beispielsweise in Form von Informationsauswahl- und Informationsspeicherschaltungen) realisiert werden, worin N die Anzahl der Signalausgänge des Analogschieberegisters 50 ist. Als Signalausgänge des Analogschieberegisters 50 treten die Ausgänge ungerader Analogspeicherglieder 51 auf. An deren Steuereingänge ist der Ausgang eines ODER-Gliedes 52 geschaltet, dessen erster Eingang an den Ausgang des Schwellengliedes 8 und dessen zweiter Eingang an den Zeilensynchroausgang der Empfangsverstärkereinheit 1 angekoppelt ist. An die Steuereingänge gerader Analogspeicherglieder 51 des Analogschieberegisters 50 ist der Ausgang eines eigenen Verzögerungsgliedes 53 (beispielsweise eines Monoflops oder einer Verzögerungsleitung) angeschlossen, dessen Eingang an den Ausgang des ODER-Gliedes 52 geschaltet ist. Der Ausgang des ODER-Gliedes 52 ist an den Summationseingang eines Reversierzählers 54 direkt und an dessen Subtraktionseingang über ein Verzögerungsglied (beispielsweise ein Monoflop oder eine Verzögerungsleitung) angeschlossen. Die Ausgänge sämtlicher Bit-

- 15 -

stellen des Reversierzählers 54 sind an die M Steuereingänge eines Multiplexers 56 (U. Titse et. al. "Poluprovodnikovaya skhemotekhnika /Halbleiterschaltungstechnik/" Verlag "Mir", Moskau, 1983, S. 326 bis 328) angeschlossen. An die N Signaleingänge des Multiplexers 56 sind die N Ausgänge des Analogschieberegisters 50 in Reihe geschaltet. Der Ausgang des Multiplexers 56 stellt den Ausgang des Entzerrers 9 für geometrische Verzerrungen eines wiederzugebenden Bildes dar und ist mit einem Eingang des Steuersignalformers 10 verbunden.

Der Steuersignalformer 10, in dem zu den Zeitpunkten der Wiedergabe der Bildkonturen eine Sägezahnspannung erzeugt wird, enthält eine Reihenschaltung aus einem Analoginverter 57 und einem Umkehrintegrator 58. Der als ein Eingang des Steuersignalformers 10 wirkende Eingang 59 des Analoginverters 57 ist an den Ausgang des Schwellengliedes 8 und der als anderer Eingang des Steuersignalformers 10 dienende Eingang 60 des Umkehrintegrators 58 an den Ausgang des Entzerrers 9 für geometrische Verzerrungen eines wiederzugebenden Bildes gelegt.

Der Analoginverter 57 weist einen Operationsverstärker 61 auf, dessen Ausgang über einen Widerstand 62 an dessen ersten Eingang angeschlossen ist, der über einen Widerstand 63 mit dem Eingang 59 des Analoginverters 57 verbunden ist. Der zweite Eingang des Operationsverstärkers 61 ist über einen Widerstand 64 mit der gemeinsamen Leitung 26 gekoppelt. Der Ausgang des Operationsverstärkers 61 ist über einen Widerstand 65 des Umkehrintegrators 58 an den ersten Eingang eines Operationsverstärkers 66 geführt, dessen Ausgang über einen Kondensator 67 an dessen ersten Eingang und über einen Widerstand 68 an den Ausgang des Entzerrers 9 für geometrische Verzerrungen eines wiederzugebenden Bildes gekoppelt ist. Der zweite Eingang des Operationsverstärkers 66 ist über einen Widerstand 69 mit der gemeinsamen Leitung 26 verbunden. Der Ausgang des Operationsverstärkers 66 ist an den Ausgangsverstärker 11 gekoppelt.

Es ist eine andere Realisierung des Steuersignalformers 10 möglich. In diesem Fall ist der Steuersignalformer 10 in Form einer Reihenschaltung aus einem Differenzverstärker 70 und einem Integrator 71 ausgeführt. An den nichtinvertierenden Eingang 72 des Differenzverstärkers 70 ist der Ausgang des Entzerrers 9 für geometrische Verzerrungen eines wiederzugebenden Bildes und an dessen invertierenden Eingang 73 der Ausgang des Schwellengliedes 8 angeschlossen.

Der Differenzverstärker 70 enthält einen Operationsverstärker 74, dessen Ausgang über einen Widerstand 75 an dessen invertierenden Eingang und über einen Widerstand 76 an den Ausgang des Schwellengliedes 8 gekoppelt ist. Der nichtinvertierende Eingang des Operationsverstärkers 74 ist über einen Widerstand 77 an den Ausgang des Entzerrers 9 für geometrische Verzerrungen eines wiederzugebenden Bildes angekoppelt und über einen Widerstand 78 mit der gemeinsamen Leitung 26 verbunden. Der Ausgang des Operationsverstärkers 74 ist über einen Widerstand 79 an den invertierenden Eingang eines Operationsverstärkers 80 angeschlossen, dessen nichtinvertierender Eingang über einen Widerstand 81 mit der gemeinsamen Leitung 26 verbunden ist. Der Ausgang des Operationsverstärkers 80 ist über einen Kondensator 82 an dessen invertierenden Eingang gelegt und mit dem Ausgangsverstärker 11 verbunden.

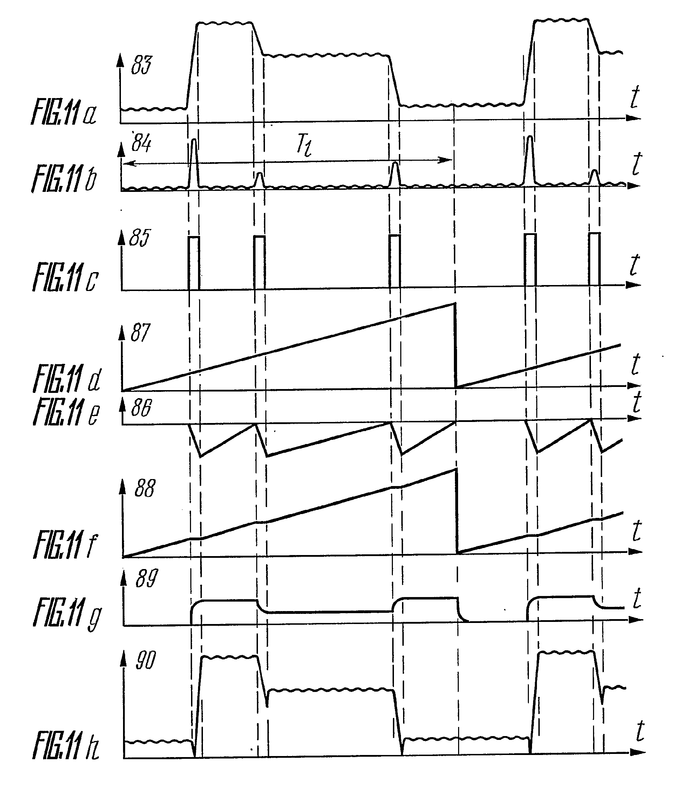

Die in Fig. 1 dargestellte Informationswiedergabeeinrichtung funktioniert wie folgt. Von der Informationssignalquelle 2 gelangt in die Empfangsverstärkereinheit 1 die Ausgangsinformation auf einer Träger- oder Videofrequenz. Hier wird wird sie in am Zeilensynchroausgang abzunehmende Zeilensynchronisationsimpulse, am Bildsynchroausgang abzunehmende Bildsynchronisationsimpulse und am Informationsausgang abzunehmende Videosignale (Signalverlauf 83 in Fig. 10a und 11a) erforderlicher Größe und Polarität umgewandelt. Die Zeilensynchronisationsimpulse gelangen in den Zeilenablenkgenerator 3 (Fig. 1) und die Bildsynchronisationsimpulse in den Bildablenkgenerator 4, wodurch eine standardgemäße (Zwischenzeilen)abtastung eines Bildes auf dem Bildschirm einer zum Wandler 5 eines Signals in ein widerzugebendes Bild gehörenden Bildröhre ermöglicht wird. Das Videosignal (Signalverlauf 83 in Fig. 10a und 11a) gelangt vom

Informationsausgang der Empfangsverstärkereinheit 1 (Fig. 1) in den Detektor 7 von Konturen eines wiederzugebenden Bildes, in dem es in ein Analogsignal umgesetzt wird, das dem Absolutwert der ersten Ableitung des Videosignals (Signalverlauf 84 in Fig. 10b, 11b) entspricht. Im Schwellenglied 8 wird dieses Signal standardisiert, d.h. in Impulse von gleicher Größe, einer gleichen Dauer und einer gleichen Polarität (Signalverlauf 85 in Fig. 10c und 11c) verwandelt. Diese Impulse kommen im Steuersignalformer 10 (Fig. 1) an, in dem sie in eine Sägezahnspannung (Signalverlauf 86 in Fig. 10e und 11e) umgewandelt werden. Diese Spannung wird mit Hilfe des Ausgangsverstärkers 11 in einen Strom verwandelt, der ein Ablenkfeld der gleichen Stärke, wie sie das durch den Zeilenblenkgenerator 3 erzeugte Feld aufweist (Signalverlauf 87 in Fig. 10 d und 11d), nur aber entgegengesetzter Polarität aufbaut. Diese Felder erzeugen, indem sie sich algebraisch zueinander addieren (Signallauf 87 in Fig. 10d und 11d), ein derartiges Ablenkfeld (Signalverlauf 88 in Fig. 10f und 11f), das zum Stoppen des Abtaststrahls bei der Wiedergabe von Bildkonturen beiträgt, die den Flanken im Ausgangs-Videosignal (Signalverlauf 83 in Fig. 10a und 11a) entsprechen.

Der Abtastgeschwindigkeit Null entsprechen horizontale Abschnitte des resultierenden Ablenkfeldes (Signalverlauf 88 in Fig. 10f und 11f). Da der Strahl praktisch vollständig für die gesamte Zeit stoppt, während der sich der Wert des der Bildröhre zugeführten Signals ändert, wird eine höchstmögliche Erhöhung der Schärfe eines wiederzugebenden Bildes (um mehr als das Doppelte) erreicht. Und da in den Steuerkanal für die Abtastgeschwindigkeit des Strahls in der erfindungsgemäßen Informationswiedergabeeinrichtung das Schwellenglied 8 eingeführt ist, wird die Abhängigkeit des Grades der Erhöhung der Schärfe eines wiederzugebenden Bildes vom Videosignalhub vollkommen beseitigt. Damit aber die Schirmhelligkeit bei der Wiedergabe der Bildkonturen wegen einer gewissen Abhängigkeit der Leuchtdichte von der Abtastgeschwindigkeit nicht zunimmt, muß sich die Größe des Videosignals zusätzlich in dem gleichen Maße wie auch die Abtastgeschwindigkeit des Strahls (Signalverlauf 89 und 90 in Fig. 10g, 11g und 10h, 11h) ändern. Dies wird durch den Entzerrer 6 für Helligkeitsverzerrungen eines widerzugebenden Bildes erreicht, der zwischen dem Informationsausgang der Empfangsverstärkereinheit 1 und dem dritten Eingang des Wandlers 5 eines Signals in ein wiederzugebendes Bild liegt, erreicht. Um geometrischen Verzerrungen eines wiederzugebenden Bildes, hervorgerufen durch eine Abtastgeschwindigkeitsmodulation, vorzubeugen, muß sich der Strahl bei der Wiedergabe des Hintergrundes um einiges schneller als bei Fehlen der Abtastgeschwindigkeitsmodulation bewegen. Hierbei muß diese erhöhte Geschwindigkeit genau so groß sein, daß der Strahl die Bildkonturen an den gleichen Stellen wie auch bei Fehlen der Abtastgeschwindigkeitsmodulation wiedergibt. Zu diesem Zweck muß die mittlere Bewegungsgeschwindigkeit des Elektronenstrahls zwischen zwei beliebigen anliegenden Konturen konstant und gleich der mittleren Geschwindigkeit der Bewegung des Strahls über den gesamten Raster sein. Es sind zwei Varianten der Organisierung derartiger Bewegung möglich: wenn sich der Strahl auf dem Hintergrundabschnitt zuerst schneller bewegt und bei der Wiedergabe der Kontur (Signalverlauf 88 in Fig. 10f) stoppt, d.h. wenn die mittlere Geschwindigkeit zwischen den Hinterkanten der anliegenden Konturen konstant ist, und wenn der Strahl zuerst auf der Kontur stoppt und dann sich auf dem anliegenden Hintergrundabschnitt (Signalverlauf 88 in Fig. 11f) schneller bewegt, d.h. wenn eine konstante mittlere Abtastgeschwindigkeit zwischen den Vorderkanten der zwei beliebigen anliegenden Bildkonturen gewährleistet ist. Derartiges Programm wird im Entzerrer 9 für geometrische Verzerrungen eines wiederzugebenden Bildes realisiert.

Durch Einführung des Entzerrers 6 für Helligkeitsverzerrungen eines wiederzugebenden Bildes und des Entzerrers 9 für geometrische Verzerrungen eines wiederzugebenden Bildes in die Informationswiedergabeeinrichtung können die genannten Bildverzerrungen vollständig beseitigt werden.

Die in Fig. 2 dargestellte Informationswiedergabeeinrichtung unterscheidet sich von der vorher betrachteten

- 19 -

dadurch, daß die zur Wiedergabe eines Farbbildes vorgesehen ist, weshalb von der Empfangsverstärkereinheit 1 auf den Wandler 5 eines Signals in ein wiederzugebendes Bild nicht ein Videosignal, sondern drei Signale gegeben werden, die der roten, grönen und der blauen Farbe entsprechen. Und jedes derartige Signal passiert seinen eigenen Entzerrer 6 für Helligkeitsverzerrungen eines wiederzugebenden Bildes.

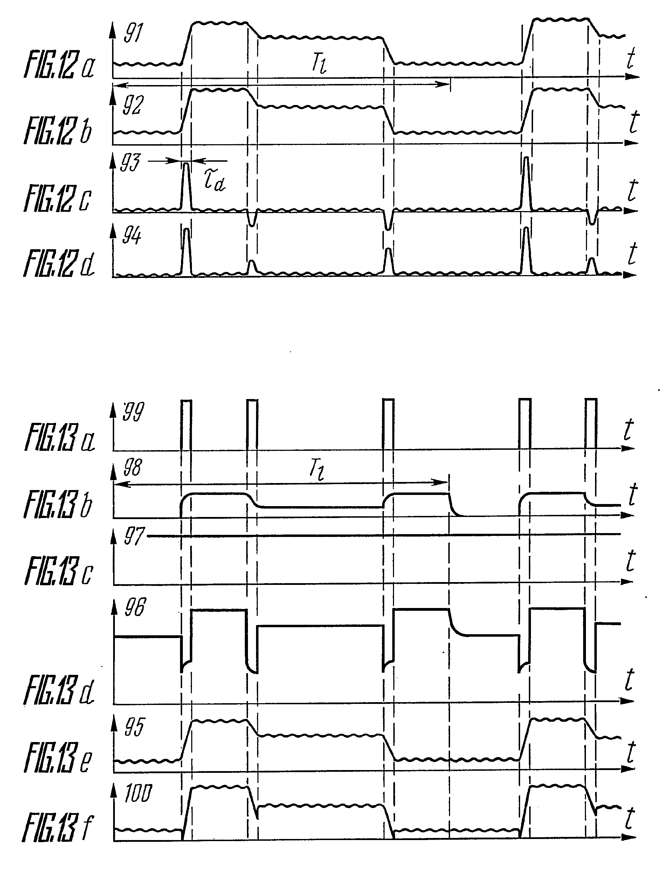

Der Detektor 7 (Fig. 3) von Konturen eines wiederzugebenden Bildes arbeitet wie folgt. In dem das Verzögerungsglied 12 und den Differenzverstärker 13 enthaltenden Differenzierglied wird das Eingangs-Videosignal (Signalverlauf 91 in Fig. 12a) durch Ermittlung einer Differenz zwischen dem ursprünglichen und dem durch das Verzögerungsglied 12 um einen Wert von etwa 50 bis 100 ns verzögerten Videosignal (Signalverlauf 92 in Fig. 12b) differenziert. Das differenzierte Videosignal (Signalverlauf 93 in Fig. 12c) passiert im weiteren den Gegentaktgleichrichter 14, wodurch der Absolutwert des genannten Signals (Signalverlauf 94 in Fig. 12d) gefunden wird.

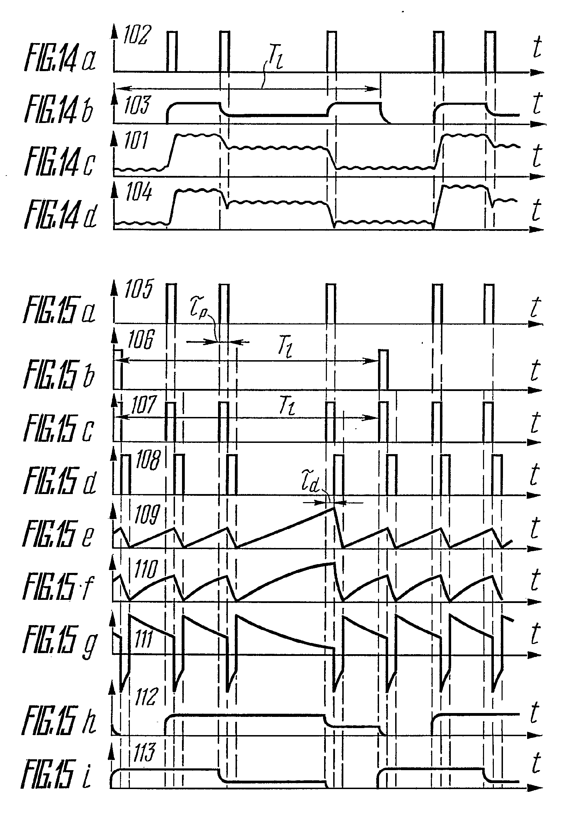

Der Entzerrer 6 für Helligkeitsverzerrungen eines wiederzugebenden Bildes, dessen Realisierung in Fig. 4 dargestellt ist, beseitigt die parasitäre Helligkeitsmodulation des Bildes durch Multiplizieren des Videosignals (Signalverlauf 95 in Fig. 13e) mit dem Signal (Signalverlauf 96 in Fig. 13d), das zur momentanen Abtastgeschwindigkeit proportional ist. Das der laufenden Abtastgeschwindigkeit proportionale Signal (Signalverlauf 96 in Fig. 13d) wird durch Summation von der für die Periode mittleren Abtastgeschwindigkeit und der mittleren Abtastgeschwindigkeit zwischen den Impulsen proportionalen Signalen (Signalverlauf 97 in Fig. 13c bzw. Signalverlauf 98 in Fig. 13b) sowie durch Substraktion eines der für die Periode mittleren Abtastgeschwindigkeit während der Zeit der Wiedergabe der Bildkonturen (Signalverlauf 99 in Fig. 13a), d.h. der Geschwindigkeit der den Abtaststrahl bremsenden Einwirkung, proportionalen Signals von den erstgenannten formiert. Das der momentanen Abtastgeschwindigkeit proportionale Signal (Signalverlauf 96 in Fig. 13d) wird im 1-Quadranten-Vervielfacher 16 (Fig. 4) mit einem Ausgangs-Videosignal (Signalverlauf 95 in Fig. 13e) multipliziert, wodurch das Videosignal (Signalverlauf 100 in Fig. 13f) entzerrt wird.

In Fig. 5 ist eine einfachere Realisierung des Entzerrers 6 für Helligkeitsverzerrungen eines wiederzugebenden Bildes dargestellt. In der Schaltung eines derartigen Entzerrers fehlt der Analogvervielfacher. Um die Helligkeit der Konturen eines wiederzugebenen Bildes zu den Zeiten, wo der Strahl stoppt, zu verringern, werden dem Ausgangs-Videoimpuls (Signalverlauf 101 in Fig. 14c) als Austastimpulse Impulse (Signalverlauf 102 in Fig. 14a) zugesetzt, die am Schwellenglied 8 abgenommen werden. Um aber die Helligkeit des Hintergrundes zwischen den Konturen um einiges zu erhöhen, das mit einer etwas höheren Geschwindigkeit abgetastet wird, wird dem Ausgangs-Videosignal das einem mittleren Zwischenimpulsanteil entsprechende Signal (Signalverlauf 103 in Fig. 14b) zugesetzt, das am Ausgang des Entzerrers 9 für geometrische Verzerrungen eines wiederzugebenden Bildes abgenommen wird, wodurch das Videosignal (Signalverlauf 104 in Fig. 14d) entzerrt wird. Das optimale Verhältnis zwischen den Werten des Videosignals (Signalverlauf 101 in Fig. 14c) und der Impulse zur Löschung der Helligkeit der Konturen (Signalverlauf 102 in Fig. 14a) wird durch die Wahl des Wertes der Widerstände 29 (Fig. 5) und 32 in der Schaltung des Entzerrers 6 für Helligkeitsverzerrungen eines wiederzugebenden Bildes sichergestellt, während das optimale Verhältnis zwischen den Werten des Videosignals (Signalverlauf 101 in Fig. 14c) und der mittleren Zwischenimpulsanteile (Signalverlauf 103 in Fig. 14b) durch die Wahl des Wertes der Widerstände 30 (Fig. 5), 33 und 31 in der Schaltung des Entzerrers 6 für Helligkeitsverzerrungen eines wiederzugebenden Bildes gewährleistet wird.

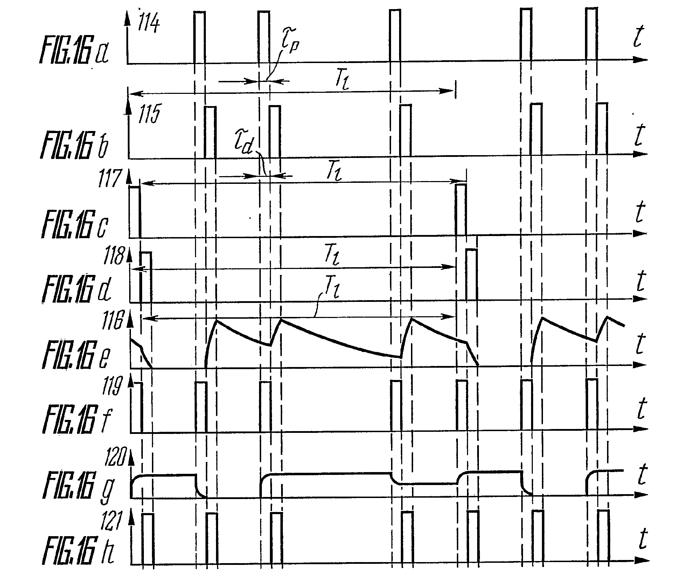

Der Entzerrer 9 für geometrische Verzerrungen eines wiederzugebenden Bildes, dessen Funktionsschaltung in Fig. 6 dargestellt ist, arbeitet folgendermaßen. Da die Größe des mittleren Zwischenimpulsanteiles umgekehrt proportional zur Dauer des Abstandes zwischen zwei benachbarten Strahlstoppimpulsen sein muß, ist es notwendig, im Entzerrer 9 auf irgendwelche Weise eine Abhängigkeit zwischen der Größe des mittleren Zwischenimpulsanteiles und der Dauer des entsprechenden Zeitabstandes in der Art einer Hyperbel herzustellen. Darüber hinaus muß die Größe des mittleren Zwischenimpulsanteiles schon ganz am Anfang des zeitlichen Impulsabstandes bekannt sein, wo dessen Dauer noch unbekannt ist. Zum Entzerrer 9 für geometrische Verzerrungen eines Wiederzugebenden Bildes muß daher unbedingt ein Pufferspeicher gehören, und die erforderliche Information wird am Ausgang des Entzerrers 9 mit einiger fester Verzögerung (beispielsweise um eine Zeilenabtastperiode $T_1$) anstehen. In der Schaltung des Entzerrers 9 realisiert der Reihenkreis aus dem Generator 38 fur eine sich linear ändernde Spannung, dem Logarithmenverstärker 39 und dem Differenzierglied 40 die Abhängigkeit in der Art einer Hyperbel gemäß bekannten mathematischen Formeln, während die Rolle des Pufferspeichers das Operativspeicherglied 44 übernimmt. Am Eingang des Entzerrers 9 für geometrische Verzerrungen eines wiederzugebenden Bildes treffen Impulse vom Ausgang des Schwellengliedes 8 (Signalverlauf 105 in Fig. 15a) und Zeilensynchronisationsimpulse vom Zeilensynchroausgang der Empfangsverstärkereinheit 1 (Signalverlauf 106 in Fig. 15b) ein. Im ODER-Glied 34 werden sie vereinigt (Signalverlauf 107 in Fig. 15c). Diese Impulse passieren das Verzögerungsglied 35 mit einer Verzögerung, die ungefähr gleich der Impulsdauer ist, d.h. $\tau_d = \tau_p$ (Signalverlauf 108 in Fig. 15d). Im Generator 38 für eine sich linear ändernde Spannung werden sie in Dreieckimpulse (Signalverlauf 109 in Fig. 15e) umgewandelt, deren Höhe proportional zur Dauer der Impulsabstände ist. Diese Impulse werden im Logarithmenverstärker 39 in Impulse (Signalverlauf 110 in Fig. 15f) umgesetzt, deren Höhe proportional zum Logarithmus der Dauer der Impulsabstände ist. Im Differenzierglied 40 werden daraus Signale (Signalverlauf 111 in Fig. 15g) erzeugt, deren Größe am Ende jedes zeitlichen Impulsabstandes umgekehrt proportional seiner Dauer ist. Diese Größe wird abgetrennt und in dem Analogspeicherglied 37 (Signalverlauf 112 in Fig. 15h) eingespeichert, an dessen erstem Eingang als Steuerimpulse unverzögerte Impulse ( Signalverlauf 107 in Fig. 15c ) eingespeist werden, die vom Ausgang des ODER--Gliedes 34 abgenommen werden. Im folgenden wird dieser Analogwert mit Hilfe des Analog-Digital-Wandlers 43 in einen Zahlenkode verwandelt und im Operativspeicherglied 44 eingespeichert. Dann wird die Information nach Ablauf einiger Zeit, die etwas kleiner als die Zeilenabtastperiode $T_1$ ist, aus dem Operativspeicherglied 44 (Signalverlauf 113 in Fig. 15i) zum erforderlichen Zeitpunkt geholt. Die Information über die Größe des mittleren Zwischenimpulsanteiles wird also im Entzerrer 9 für geometrische Verzerrungen eines wiederzugebenden Bildes mit einer Verzögerung um eine Zeilenabtastperiode $T_1$ geliefert. Um diese Verzögerung auszugleichen, sind daher im Entzerrer 6 für Helligkeitsverzerrungen eines wiederzugebenden Bildes an den ersten und zweiten Eingang sowie an den ersten Eingang des Steuersignalformers 10 zusätzliche Verzögerungsglieder mit einer Verzögerung anzuschließen, die der Zeilenabtastperiode $T_1$ gleich ist. Die in Fig. 6 dargestellte Funktionsschaltung des Entzerrers 6 für geometrische Verzerrungen eines wiederzugebenden Bildes ist vereinfacht und veranschaulicht seine Arbeitsweise lediglich in groben Zügen. So sind in dieser Schaltung der Einfachheit halber keine Steuerkreise für die Informationsadressierung im Operativspeicherglied 44 beim Schreiben und Lesen angedeutet.

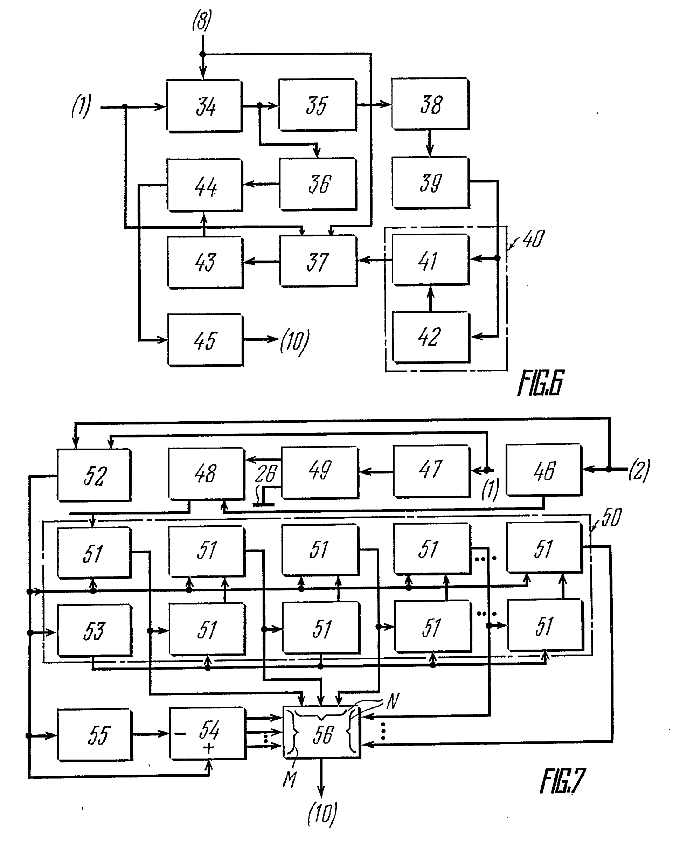

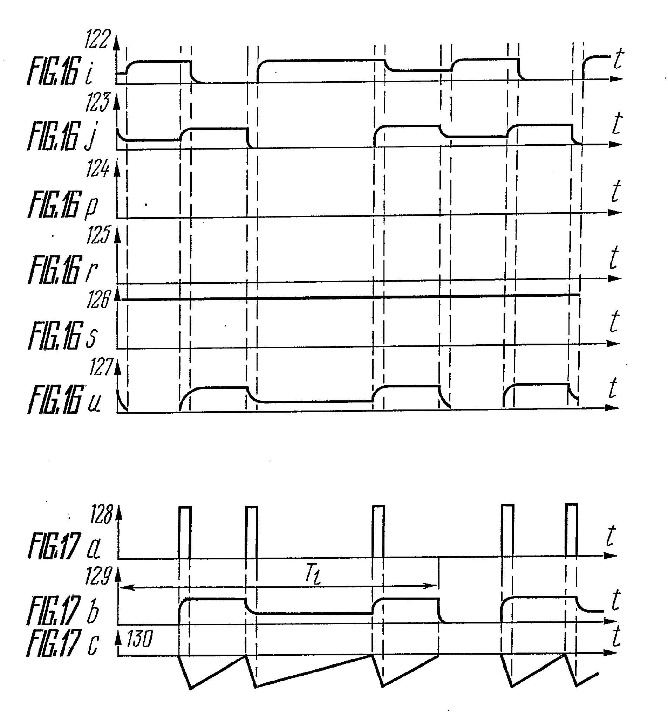

Der Entzerrer 9 für geometrische Verzerrungen eines wiederzugebenden Bildes, dessen Funktionsschaltung in Fig. 7 dargestellt ist, unterscheidet sich von dessen vorheriger Realisierung dadurch, daß erstens die für die Konturen mittlere Abtastgeschwindigkeitskomponente nicht zwischen den Hinter-, sondern zwischen den Vorderflanken der Konturen liegt, daß zweitens an Stelle der gesuchten Hyperbelabhängigkeit zwischen der Größe des mittleren Zwischenimpulsanteiles und der Dauer des entsprechenden Zeitabstandes deren Approximation durch eine Exponentialabhängigkeit benutzt wird, und daß drittens als Pufferspeicher das Analogspeicherglied eingesetzt wird. Die vom Schwellenglied 8 kommenden Impulse (Signalverlauf 114 in Fig. 16a), die im Verzögerungsglied 46 um eine Zeit verzögert werden, die ungefähr gleich der Impulsdauer ist, d.h. $\tau_d = \tau_p$ (Signalverlauf 115 in Fig. 16b), laden schnell den (in Fig. nicht gezeigten) Kondensator des Spitzendetektors 48 auf eine Spannung auf, die gleich der Impulshöhe (Signalverlauf 116 in Fig. 16e) ist. Dann wird der Kondensator des Spitzendetektors 48 nach dem exponential gesetz mit einer vorhin festgelegten Zeitkonstanten entladen, die kleiner als die Zeilenabtastperiode $T_l$ ist. Hierbei ändert sich die Spannung am Ausgang des Spitzendetektors 48 (Signalverlauf 116 in Fig. 16e) exponential. Nach Beendigung des Zeilenhinlaufes entlädt sich der Kondensator des Spitzendetektors 48 durch einen Zeilensynchronisationsimpuls (Signalverlauf 117 in Fig. 16c), der im Verzögerungsglied 47 (Signalverlauf 118 in Fig. 16d) um einen Wert von $\tau_d = \tau_p$ verzögert wird. Aus der im Spitzendetektor 48 geformten Exponentialspannung (Signalverlauf 116 in Fig. 16e) wird deren Größe am Ende des Impulsabstandes (Signalverlauf 120 in Fig. 16g) im ersten Analogspeicherglied 51 des Analogschieberegisters 50 mit Hilfe unverzögerter Zeilensynchronisationsimpulse (Signalverlauf 117 in Fig. 16c) und durch das Schwellenglied 8 (Signalverlauf 114 in Fig. 16a) formierter Impulse, die im ODER-Glied 52 (Signalverlauf 119 in Fig. 16f) zu einer einheitlichen Folge vereinigt sind, gewählt. Durch die gleiche, im Verzögerungsglied 53 (Fig. 7) des Analogschieberegisters 50 (für eine Zeitspanne von $\tau_d = \tau_p$) verzögerte Impulsfolge (Signalverlauf 121 in Fig. 16h) wird der gespeicherte Analogwert vom ersten zum zweiten Analogspeicherglied 51 des Analogschieberegisters 50 (Signalverlauf 122 in Fig. 16i) übertragen. Mit dem Eintreffen eines weiteren Impulses aus der Impulsfolge am Ausgang des ODER-Gliedes 52 wird im ersten Analogspeicherglied 51 des Analogschieberegisters 50 die nächstfolgende Größe des mittleren Zwischenimpulsanteiles am Ausgang des Spitzendetektors 48 (Signalverlauf 120 in Fig. 16g) eingespeichert, während die vorhergehende Größe zum dritten Analogspeicherglied 51 des Analogschieberegisters 50 (Signalverlauf 123 in Fig. 16j) geschoben wird. Bei Eintreffen eines weiteren Impulses vom Ausgang des ODER-Gliedes 52 speichert das erste Analogspeicherglied 51 die neue Analoggröße des mittleren Zwischenimpulsanteiles ein, während in die übrigen ungeraden Analogspeicherglieder 51 die Analoggrößen aus dem vorhergehenden geraden Analogspeicherglied 51 verschoben werden. Und nach Abklingen dieser Impulse (Signalverlauf 119 in Fig. 16f) verschieben sich sämtliche Größen unter der Wirkung der verzögerten Impulse (Signalverlauf 121 in Fig. 16h) aus den ungeraden Analogspeichergliedern 51 in die nachfolgenden geraden Analogspeicherglieder 51 des Analogschieberegisters 50. Da die N Ausgänge sämtlicher ungeraden Analogspeicherglieder 51 an die N Eingänge des Multiplexers 56 angeschlossen sind, so kann eine beliebige Analoggröße des mittleren Zwischenimpulsanteiles zum Ausgang unter der Wirkung von Steuerspannungen (Signalverläufe 124, 125, 126 in Fig. 16p, r,s,u) übertragen werden, die den zugeordneten Stellen des Reversierzählers 54 entnommen werden, in dem die Adresse des Analogspeichergliedes 51 des Analogschieberegisters 50 gebildet wird, von dem zur gegebenen Zeit der Wert der Analoggröße des mittleren Zwischenimpulsanteils Abtastgeschwindigkeitskomponente (Signalverlauf 127 in Fig. 16u) geholt werden muß,

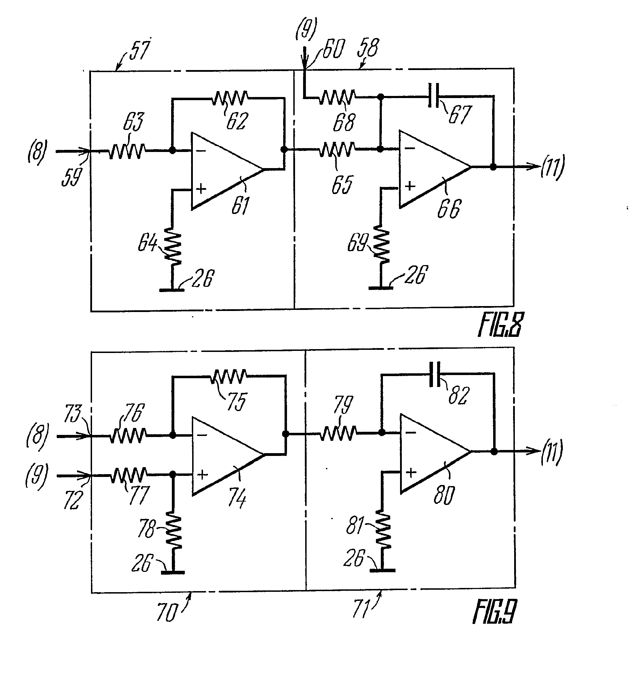

Der Steuersignalformer 10, dessen elektrische Schaltung in Fig. 8 dargestellt ist, arbeitet wie folgt. Das Signal der mittleren Zwischenimpulsanteile (Signalverlauf 128 in Fig. 17a) wird im Analoginverter 57 invertiert und gelangt an den Eingang des Integrators 58. Der Eingang des Integrators 58 wird auch mit Impulsen vom Ausgang des Entzerrers 9 (Signalverlauf 129 in Fig. 17b) beaufschlagt. Durch deren Integration wird gerade eine Dreieckspannung erforderlicher Form, Größe und Polarität (Signalverlauf 130 in Fig. 17c) erzeugt, die dann im Wandler 5 eines Signals in ein wiederzugebendes Bild umgesetzt wird.

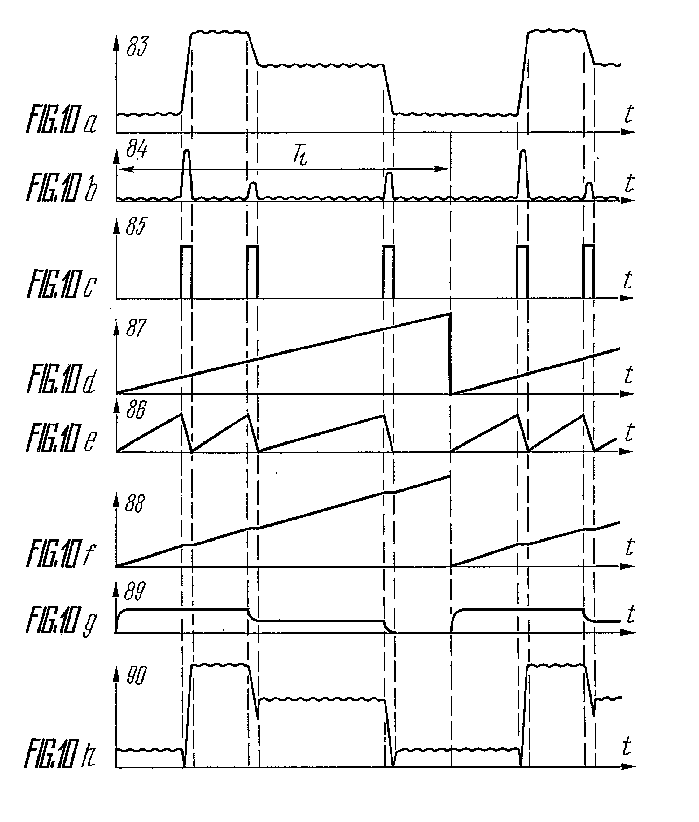

In dem Steuersignalformer 10, dessen elektrische Schaltung in Fig. 9 dargestellt ist, werden die beiden Eingangssignale (Signalverläufe 128 und 129 in Fig. 17a,b) auf den Eingang des Differenzverstärkers 70 gegeben, dessen Ausgangssignal am Integrator 71 ankommt. Im Integrator 71 wird

- 25 -

die gleiche Dreieckspannung (Signalverlauf 130 in Fig. 17c) wie auch im vorherigen Fall formiert.

In der Informationswiedergabeeinrichtung wird der Abtaststrahl für die Zeit der Wiedergabe der Bildkonturen ganz gestoppt. Dadurch wird der Einfluß der unzureichenden Auflösung der Glieder zur Informationsgewinnung und -speicherung auf die Größe des resultierenden Unschärfebereichs behoben. In der Folge wird eine Erhöhung der Schärfe der wiederzugebenden Bilder um das ca. zweifache erreicht, wobei die wegen der Unbeständigkeit der Zeilenabtastgeschwindigkeit entstehenden geometrischen und Helligkeitsverzerrungen eines wiederzugebenden Bildes praktisch vollständig beseitigt werden.

## Gewerbliche Anwendbarkeit

Die Erfindung kann in den Wiedergabeeinrichtungen sowohl für Zweigradations- (Displays der EDVA, Sichtgeräte der Radarstationen) als auch Halbtoninformationen (Fernsehempfänger, Monitoren nichtöffentlicher Fernsehsysteme) so in Schwarz-Weiß wie auch in Farbe verwendet werden.

PATENTANSPRÜCHE

1. Informationswiedergabeeinrichtung, die eine zum Empfang, der Verstärkung und Trennung eines Informations-Videosignals sowie eines Zeilen- und eines Bildsynchronisationssignals vorgesehene Empfangsverstärkereinheit mit einem Zeilen-, einem Bildsynchroausgang, mit mindestens einem Informationsausgang und einem an eine Informationssignalquelle angeschlossenen Eingang, einen Zeilen- und einen Bildablenkgenerator, die zur Standardrastererzeugung dienen und deren Eingänge jeweils mit dem Zeilen- und Bildsynchroausgang der Empfangsverstärkereinheit verbunden sind, einen zur Erzeugung eines wiederzugebenden Bildes auf dem Bildschirm der Bildröhre Wandler eines Signals in ein wiederzugebendes Bild, dessen erster Eingang mit dem Ausgang des Zeilenablenkgenerators verbunden, dessen zweiter Eingang an den Ausgang des Bildablenkgenerators angeschlossen und dessen dritter Eingang mit dem Informationsausgang der Empfangsverstärkereinheit elektrisch gekoppelt ist, einen Ausgangsverstärker, dessen Ausgang mit einem vierten Eingang des Wandlers eines Signals in ein wiederzugebendes Bild verbunden ist, einen Detektor von Konturen eines wiederzugebenden Bildes enthält, der zur Formierung eines Steuersignals für das Zeilenabtastverfahren bei der Wiedergabe der Bildkonturen dient und dessen Eingang an den Informationsausgang der Empfangsverstärkereinheit angeschlossen ist, d a d u r c h   g e k e n n z e i c h n e t, daß sie ein Schwellenglied (8) das an den Ausgang des Detektors (7) von Konturen eines wiederzugebenden Bildes angeschlossen ist und bei der Wiedergabe der Bildkonturen für die Erhaltung einer gleichbleibenden und nahe bei Null liegenden Zeilenabtastgeschwindigkeit des Strahls sorgt, einen Steuersignalformer (10) aufweist, in dem zu den Zeitpunkten der Wiedergabe der Bildkonturen eine Sägezahnspannung erzeugt und dessen erster Eingang an den Ausgang des Schwellengliedes (8) geschaltet ist, während dessen Ausgang an den Eingang des Ausgangsverstärkers (11) gelegt ist, der zur Umwandlung der Sägezahnspannung in einen Sägezahnstrom dient, der ein Ablenkfeld der gleichen Stärke, wie sie das durch den Zeilenablenkgenerator (3) erzeugte Feld aufweist, nur aber entgegengesetzter Polarität aufbaut.

2. Informationswiedergabeeinrichtung nach Anspruch 1, d a d u r c h g e k e n n z e i c h n e t, daß sie einen Entzerrer (9) für geometrische Verzerrungen eines wiederzugebenden Bildes enthält, der zur Verhinderung von räumlichen Verschiebungen der Konturen eines wiederzugebenden Bildes dient und dessen erster Eingang an den Ausgang des Schwellengliedes (8), dessen zweiter Eingang an den Zeilensynchroausgang der Empfangsverstärkereinheit (1) angeschlossen und dessen Ausgang mit dem zweiten Eingang des Steuersignalformers (10) verbunden ist.

3. Informationswiedergabeeinrichtung nach den Ansprüchen 1,2, d a d u r c h g e k e n n z e i c h n e t, daß sie einen Entzerrer (6) für Helligkeitsverzerrungen eines wiederzugebenden Bildes enthält, der zur Verhinderung von Verzerrungen der Helligkeitsstufen der Konturen eines wiederzugebenden Bildes und des Hintergrundes dient und elektrisch zwischen dem Informationsausgang der Empfangsverstärkereinheit (1) und dem dritten Eingang des Wandlers (5) zur Umwandlung eines Signals in ein wiederzugebendes Bild geschaltet ist, wobei der zweite Eingang des Entzerrers (6) für Helligkeitsverzerrungen eines widerzugebenden Bildes an den Ausgang des Schwellengliedes (8) und dessen dritter Eingang an den Ausgang des Entzerrers (9) für geometrische Verzerrungen eines wiederzugebenden Bildes angelegt ist.

4. Informationswiedergabeeinrichtung nach Anspruch 3, d a d u r c h g e k e n n z e i c h n e t, daß sie zwei zusätzliche Entzerrer (6) für Helligkeitsverzerrungen eines wiederzugebenden Bildes umfaßt, die zur Entzerrung der Helligkeitsstufen von Farbsignalen dienen und deren erste Eingänge jeweils an den zweiten und dritten Informationsausgang der Empfangsverstärkereinheit (1), deren zweite Eingänge an den Ausgang des Schwellengliedes (8), deren dritte Eingänge an den Ausgang des Entzerrers (9) für geometrische Verzerrungen eines wiederzugebenden Bildes und deren Ausgänge jeweils an den fünften und sechsten Eingang des Wandlers (5) eines Signals in ein wiederzugebendes Bild geschaltet sind.

5. Informationswiedergabeeinrichtung nach einem der Ansprüche 3, 4, d a d u r c h   g e k e n n z e i c h n e t, daß der Entzerrer (6) für Helligkeitsverzerrungen eines wiederzugebenden Bildes einen Differenzverstärker (15) aufweist, der zur Subtraktion eines im Schwellenglied (8) formierten Signals von dem zu einem am Ausgang des Entzerrers (9) für geometrische Verzerrungen eines wiederzugebenden Bildes abgenommenen Signal addierten Ausgangs-Informationssignal dient, wobei an einen Eingang des Differenzverstärkers (15) der Ausgang des Schwellengliedes (8), an dessen anderen Eingang der Ausgang des Entzerrers (9) für geometrische Verzerrungen eines wiederzugebenden Bildes, an dessen dritten Eingang der Informationsausgang der Empfangsverstärkereinheit (1) angeschlossen und dessen Ausgang mit dem dritten Eingang des Wandlers (5) zur Umwandlung eines Signals in ein wiederzugebendes Signal gekoppelt ist.

6. Informationswiedergabeeinrichtung nach Anspruch 2, d a d u r c h   g e k e n n z e i c h n e t, daß der Entzerrer (9) für geometrische Verzerrungen eines wiederzugebenden Bildes Verzögerungsglieder (35,36), ein Analogspeicherglied (37), ein ODER-Glied (34), dessen erster Eingang an den Ausgang des Schwellengliedes (8), dessen zweiter Eingang an den Zeilensynchroausgang der Empfangsverstärkereinheit (1) und dessen Ausgang an die Eingänge der Verzögerungsglieder (35,36) und des Analogspeichergliedes (37) angeschlossen ist, einen Logarithmenverstärker (39), ein Differenzierglied (40), einen Generator (38) für eine sich linear ändernde Spannung, dessen Eingang an den Ausgang des Verzögerungsgliedes (35) und dessen Ausgang an den Logarithmenverstärker (39) gelegt ist, der an das Differenzierglied (40) angeschlossen ist, dessen Ausgang mit dem dritten Eingang des Analogspeichergliedes (37) verbunden ist, einen Analog-Digital- und einen Digital-Analog-Wandler (43 bzw. 45), ein Operativspeicherglied (44) enthält, an dessen ersten Eingang das Verzögerungsglied (36), an dessen zweiten Eingang der Ausgang des mit dem Ausgang des Analogspeichergliedes (37) verbundenen Analog-Digital-Wandlers (43) und an dessen Ausgang der Digital-Analog-Wandler (45) angeschlossen ist, dessen Ausgang als Ausgang des Entzerrers (9) für geometrische Verzerrungen eines wiederzugebenden Bildes auftritt und mit dem Eingang des Steuersignalformers (10) gekoppelt ist.

7. Informationswiedergabeeinrichtung nach Anspruch 2,
d a d u r c h   g e k e n n z e i c h n e t, daß der Entzerrer (9) für geometrische Verzerrungen eines wiederzugebenden Bildes einen Spitzendetektor (48), einen elektronischen
Schalter (49), ein Analogschieberegister (50), ein Verzögerungsglied (46), dessen Eingang mit dem Ausgang des Schwellengliedes (8) und dessen Ausgang mit dem Spitzendetektor (48)
verbunden ist, ein Verzögerungsglied (47), dessen Eingang
mit dem Zeilensynchroausgang der Empfangsverstärkereinheit
(1) und dessen Ausgang mit dem Steuereingang des elektronischen Schalters (49) gekoppelt ist, dessen einer Signalausgang an die gemeinsame Leitung und dessen anderer Signalausgang an den zweiten Eingang des Spitzendetektors (48) angeschlossen ist, dessen Ausgang an den Signaleingang des Analogschieberegisters (50) gelegt ist, ein ODER-Glied (52),
dessen einer Eingang an den Ausgang des Schwellengliedes (8),
dessen anderer Eingang an den Zeilensynchroausgang der Empfangsverstärkereinheit (1) und dessen Ausgang an den Steuereingang des Analogschieberegisters (50) angekoppelt ist,
einen Reversierzähler (54), ein Verzögerungsglied (55), dessen Eingang an den Ausgang des ODER-Gliedes (52) und dessen
Ausgang an den Subtraktionseingang des Reversierzählers (54)
angeschlossen ist, an dessen Summationseingang der Ausgang
des ODER-Gliedes (52) angekoppelt ist, und einen Multiplexer
(56) enthält, an dessen N Signaleingänge die N Ausgänge des
Analogschieberegisters (50), an dessen M Steuereingänge die
Ausgänge des Reversierzählers (54) angeschlossen sind und
dessen Ausgang als Ausgang des Entzerrers (9) für geometrische Verzerrungen eines wiederzugebenden Bildes dient und
mit dem Eingang des Steuersignalformers (10) gekoppelt ist.

8. Informationswiedergabeeinrichtung nach Anspruch 7,
d a d u r c h   g e k e n n z e i c h n e t, daß das Analogschieberegister (50) in Reihe liegende 2N-1 Analogspeicherglieder (51), von denen die ungeraden mit ihren Ausgängen
an die N Signaleingänge des Multiplexers (56) angeschlos-

- 30 -

sen sind, und ein Verzögerungsglied (53) aufweist, dessen Eingang mit den Steuereingängen der ungeraden Analogspeicherglieder (51) verbunden und dessen Ausgang an die Steuereingänge der geraden Analogspeicherglieder (51) angelegt ist.

FIG.1

FIG.2

FIG.4

FIG.3

FIG.5

**FIG.6**

**FIG.7**

FIG.8

FIG.9

FIG.10 a  83

FIG.10 b  84  $T_l$

FIG.10 c  85

FIG.10 d  87

FIG.10 e  86

FIG.10 f  88

FIG.10 g  89

FIG.10 h  90

FIG.11 a

FIG.11 b

FIG.11 c

FIG.11 d

FIG.11 e

FIG.11 f

FIG.11 g

FIG.11 h

FIG.12 a    91    $T_l$    $t$

FIG.12 b    92    $t$

FIG.12 c    93    $\tau_d$    $t$

FIG.12 d    94    $t$

FIG.13 a    99    $t$

FIG.13 b    98    $T_l$    $t$

FIG.13 c    97    $t$

FIG.13 d    96    $t$

FIG.13 e    95    $t$

FIG.13 f    100    $t$

FIG.14 a    102    $T_l$    t

FIG.14 b    103    t

FIG.14 c    101    t

FIG.14 d    104    t

FIG.15 a    105    $\tau_p$    t

FIG.15 b    106    $T_l$    t

FIG.15 c    107    $T_l$    t

FIG.15 d    108    t

FIG.15 e    109    $\tau_d$    t

FIG.15 f    110    t

FIG.15 g    111    t

FIG.15 h    112    t

FIG.15 i    113    t

FIG.16 a

FIG.16 b

FIG.16 c

FIG.16 d

FIG.16 e

FIG.16 f

FIG.16 g

FIG.16 h

FIG.16 i    122

FIG.16 j    123

FIG.16 p    124

FIG.16 r    125

FIG.16 s    126

FIG.16 u    127

FIG.17 a    128

FIG.17 b    129    $T_i$

FIG.17 c    130

# INTERNATIONAL SEARCH REPORT

International Application No PCT/SU 88/00079

## I. CLASSIFICATION OF SUBJECT MATTER (if several classification symbols apply, indicate all) •

According to International Patent Classification (IPC) or to both National Classification and IPC

IPC$^4$    H 04 N 5/44

## II. FIELDS SEARCHED

Minimum Documentation Searched [7]

| Classification System | Classification Symbols |
|---|---|
| IPC$^4$ | H 04 N 5/44, 5/68 |

Documentation Searched other than Minimum Documentation
to the Extent that such Documents are Included in the Fields Searched •

## III. DOCUMENTS CONSIDERED TO BE RELEVANT •

| Category • | Citation of Document, [11] with indication, where appropriate, of the relevant passages [12] | Relevant to Claim No. [13] |
|---|---|---|
| A | US, A, 4185301 (MATSUSHITA ELECTRIC INDUSTRIAL Co., LTD) 22 January 1980 (22.01.80), see column 3, lines 6-14, abstract, figure 4<br>    &     CA, A, III4944, 22.I2.8I<br>               JP, B2, 56-I3064, 26.03.8I<br>               JP, B2, 56-I3065, 26.03.8I<br>               JP, A, 54-I0487, 26.0I.79<br>-- | 1-8 |
| A | US, A, 4309725 (RCA CORPORATION) 5 January 1982 (05.01.82), see the abstract<br>-- | 1-8 |
| A | FR, A1, 2456451 (NV PHILIPS GLOEILAMPEN-FABRIEKEN), 5 December 1980 (05.12.80) see the drawings<br>    &     CA, A, II50395, I9.07.83<br>               US, A, 4308555, 29.I2.8I<br>               DE, C2, 30I728I, I9.08.82<br>               FI, B, 80I454, I0.II.80<br>               GB, A, 2056824, I8.03.8I<br>               JP, A, 55-I50680, 22.II.80<br>               NL, A, 7903625, II.II.80<br>               IT, A, II3II56, I8.06.86<br>-- | 1-8<br><br><br><br><br><br><br><br>./. |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 18 November 1988 (18.11.88) | 6 January 1989 (06.01.89) |
| International Searching Authority<br><br>ISA/SU | Signature of Authorized Officer |

Form PCT/ISA/210 (second sheet) (January 1985)

| III. DOCUMENTS CONSIDERED TO BE RELEVANT (CONTINUED FROM THE SECOND SHEET) |||
|---|---|---|
| Category * | Citation of Document, with indication, where appropriate, of the relevant passages | Relevant to Claim No |
| A | FR, A1, 2568434 (RCA CORPORATION) 31 January 1986 (31.01.86), see the abstract, figure 4 <br> & CA, A, 1143830, 29.03.83 <br> GB, A, 2050729, 07.01.81 <br> JP, A, 55-156478,05.12.80 <br> US, A, 4250525, 10.02.81 <br> DE,C2, 3017934, 09.12.82 <br> -- | 1-8 |
| A | GB, B, 1601319 (RCA CORPORATION), 28 October 1981 (28.10.81), see the claims, figures <br> & JP,B2, 58-42997, 22.09.83 <br> DE,C3, 2819775 , 19.11.81 <br> AT, B, 377404, 25.03.85 <br> FR,B1, 2390062, 22.02.85 <br> US, A, 4137552, 30.01.79 <br> IT, A, 1095621, 10.08.85 <br> -- | 1-8 |
| A | GB, A, 2089623 (SONY CORPORATION), 23 June 1982 (23.06.82), see the abstract figure 1 <br> & JP, A, 57-91085, 07.06.82 <br> CA, A, 1196084, 29. 10.85 <br> ----------- | 1-8 |

Form PCT/ISA/210 (extra sheet) (January 1985)